# EUROPÄISCHE PATENTANMELDUNG

(11) **EP 3 715 985 A1**
(43) Veröffentlichungstag der Anmeldung: **30.09.2020**
(21) Anmeldenummer: 19166135.4
(22) Anmeldetag: 29.03.2019
(51) Int. Cl.: G05B 19/418, G06Q 10/00

(54) **VERFAHREN UND SYSTEM ZUM SPEZIFIZIEREN EINES DIGITALEN MODELLS FÜR EINEN AUTOMATISIERTEN PROZESS**

(71) Anmelder: Siemens Aktiengesellschaft, 80333 München (DE)
(72) Erfinder: Kast, Bernd, 89335 Ichenhausen (DE); Meister, Philine, 85051 Ingolstadt (DE); Meyer-Delius Di Vasto, Daniel, 81541 München (DE); Neubauer, Werner, 81739 München (DE); Fiegert, Michael, 81739 München (DE); Ackermann, Simon, 80798 München (DE); Albrecht, Sebastian, 85399 Hallbergmoos (DE); Cramer, Dieter, 81543 München (DE); Fiege, Ludger, 85567 Grafing (DE); Mayer, Peter, 81739 München (DE); Obradovic, Dragan, 85521 Ottobrunn (DE); Szabo, Andrei, 85521 Ottobrunn (DE)

(57) **Zusammenfassung**

Verfahren zum Spezifizieren eines digitalen Modells (11a...11n) für einen automatisierten Prozess, aufweisend die Schritte:
a) Bereitstellen von Sensordaten;
b) Verknüpfen der Sensordaten mit Daten des digitalen Modells (lla...lln);
c) Anzeigen oder Ausgeben der mit den Sensordaten verknüpften Daten des digitalen Modells (lla...lln);
d) Bereitstellen einer Möglichkeit zum Bestätigen oder Konfigurieren der mit den Sensordaten verknüpften Daten des digitalen Modells (11a...11n) durch eine Eingabe eines Anwenders; und
e) Berücksichtigen der vom Anwender bestätigten oder konfigurierten mit den Sensordaten verknüpften Daten des digitalen Modells (11a...11n).

## Beschreibung

Die Erfindung betrifft ein Verfahren zum Spezifizieren eines digitalen Modells für einen automatisierten Prozess. Die Erfindung betrifft weiterhin ein System zum Spezifizieren eines digitalen Modells für einen automatisierten Prozess. Die Erfindung betrifft weiterhin ein Computerprogrammprodukt.

Bekannt sind Augmented-Reality-Systeme, bei denen intuitive Visualisierungen von Informationen vorgesehen sind. In der Regel erlauben Augmented-Reality-Systeme keine Anpassung der Modelle durch den Benutzer.

Bekannt sind in der Robotik ferner Teach-in-Systeme, bei denen ein Benutzer beispielsweise einen Roboter an eine Position bringt. Das Teach-in-System merkt sich diese Position, wodurch der Roboter diese Position später immer wieder erreichen kann.

Es ist eine Aufgabe der vorliegenden Erfindung, ein verbessertes Verfahren zum Spezifizieren eines digitalen Modells für einen automatisierten Prozess bereitzustellen.

Die Aufgabe wird gemäß einem ersten Aspekt gelöst mit einem Verfahren zum Spezifizieren und/oder Steuern eines automatisierten Prozesses mit den Schritten:
a) Bereitstellen von Sensordaten;
b) Verknüpfen der Sensordaten mit Daten des digitalen Modells;
c) Anzeigen oder Ausgeben der mit den Sensordaten verknüpften Daten des digitalen Modells;
d) Bereitstellen einer Möglichkeit zum Bestätigen oder Konfigurieren der mit den Sensordaten verknüpften Daten des digitalen Modells durch eine Eingabe eines Anwenders; und
e) Berücksichtigen der vom Anwender bestätigten oder konfigurierten, mit den Sensordaten verknüpften Daten des digitalen Modells.

Auf diese Weise kann zum Beispiel vorteilhaft eine integrierte Inbetriebnahme eines automatisierten Produktionssystems realisiert werden. Automatisierte Prozesse können dadurch optimiert ablaufen, weil Prozessdaten (z.B. physikalische Daten für die Fertigung) zentral hinterlegt sind, wobei die Prozessdaten mit realen Sensordaten abgeglichen und mit digitalen Modellen zu digitalen Zwillingen verknüpft werden. Dadurch wird vorteilhaft eine vollständige Steuerung des automatisierten Prozesses ermöglicht, wodurch im Ergebnis ein Engineering Tool mit sämtlichen Prozessdaten des automatisierten Prozesses bereitgestellt wird.

Gemäß einem zweiten Aspekt wird die Aufgabe gelöst mit einem System zum Spezifizieren eines automatisierten Prozesses, aufweisend:
- eine erste Schnittstelle zum funktionalen Anbinden einer Vorrichtung des automatisierten Prozesses, wobei von der Vorrichtung des automatisierten Prozesses Sensordaten bereitstellbar sind;
   - eine Datenbank mit wenigstens einem digitalen Modell des automatisierten Prozesses;
   - eine Spezifizierungseinrichtung zum Verknüpfen der Sensordaten mit dem wenigstens einen digitalen Modell; und
   - eine Bedieneinrichtung zu einem Bereitstellen einer Möglichkeit zum Bestätigen oder Konfigurieren des mit den Sensordaten verknüpften digitalen Modells durch einen Anwender; wobei
   - mittels der Spezifizierungseinrichtung die vom Anwender bestätigten oder korrigierten mit den Sensordaten verknüpften Daten des digitalen Modells für die Spezifizierung des digitalen Modells berücksichtigt werden.

Eine vorteilhafte Weiterbildung des Verfahrens zeichnet sich dadurch aus, dass die bestätigten, ergänzten oder geänderten mit den Sensordaten verknüpften Daten in ein überarbeitetes digitales Modell übernommen werden, wobei das überarbeitete digitale Modell für eine Ausführung des automatisierten Prozesses verwendet wird. Vorteilhaft können auf diese Weise Prozessdaten bestmöglich an den automatisierten Prozess angepasst werden.

Eine weitere vorteilhafte Weiterbildung des Verfahrens sieht vor, dass die mit den Sensordaten verknüpften Daten des digitalen Modells ein Objekt oder wenigstens einen Teil eines Objektes oder wenigstens einen Parameter eines Objektes darstellen. Auf diese Weise kann unter Mitwirkung des Anwenders eine möglichst vollständige Spezifizierung eines Objekts des automatisierten Prozesses erfolgen.

Eine weitere vorteilhafte Weiterbildung des Verfahrens zeichnet sich dadurch aus, dass die mit den Sensordaten verknüpften Daten des digitalen Modells einen Schritt des automatisierten Prozesses oder wenigstens einen Parameter eines Schrittes des automatisierten Prozesses oder wenigstens ein Zwischenstadium des Prozesses oder den gesamten Prozess darstellen. Auf diese Weise kann unter Mitwirkung des Anwenders eine möglichst vollständige Spezifizierung eines Verfahrens des automatisierten Prozesses erfolgen.

Eine weitere vorteilhafte Weiterbildung des Verfahrens zeichnet sich dadurch aus, dass wenigstens einer aus folgenden Parametern des digitalen Modells des Objekts geändert werden kann: Gewicht, Größe, Lage, Material, Farbe, Temperatur, Geometrie, Materialcharakteristikum. Dadurch ist eine vielfältige Spezifizierung von digitalen Modellen von Objekten mit unterschiedlichen Parametern unterstützt.

Eine weitere vorteilhafte Weiterbildung des Verfahrens zeichnet sich dadurch aus, dass wenigstens einer aus folgenden Parametern des digitalen Modells des Prozesses geändert werden kann: Reihenfolge von Schritten des Prozesses, Prozessparameter wie Temperatur, Material, Trajektorie für ein Führen eines automatisierten Fahrzeuges oder eine Position zum Ergreifen eines Objekts. Dadurch ist eine vielfältige Spezifizierung von digitalen Modellen von Verfahren mit unterschiedlichen Parametern unterstützt.

Eine weitere vorteilhafte Weiterbildung des Verfahrens zeichnet sich dadurch aus, dass das digitale Modell in Form eines digitalen Zwillings ausgebildet ist. Dadurch kann vorteilhaft unter Mitwirkung des Anwenders eine konkrete Instanz eines digitalen Modells in Form eines digitalen Zwillings spezifiziert werden.

Eine vorteilhafte Weiterbildung des Systems zeichnet sich dadurch aus, dass die Bedieneinrichtung eine graphische Benutzeroberfläche und/oder eine Virtual-Reality-Brille ist. Vorteilhaft werden dadurch unterschiedliche technische Möglichkeiten für die Bedieneinrichtung bereitgestellt, mit der das digitale Modell für den automatisierten Prozess unter Mitwirkung des Anwenders spezifiziert werden kann.

Eine weitere vorteilhafte Weiterbildung des Systems ist dadurch gekennzeichnet, dass die Spezifizierungseinrichtung aus den Sensordaten wenigstens ein Objekt erkennt und mittels der Bedieneinrichtung anzeigt. Auf diese Weise können aus den Sensordaten tatsächliche, der Realität entsprechende technische Objekte ausgewählt werden.

Eine weitere vorteilhafte Weiterbildung des Systems ist dadurch gekennzeichnet, dass das angezeigte Objekt mittels der Bedieneinrichtung bestätigt oder abgelehnt werden kann und/oder Parameter des Objekts geändert werden können. Auf diese Weise ist eine effiziente und umfassende Spezifizierung des Systems durch den Anwender unterstützt.

Eine weitere vorteilhafte Weiterbildung des Systems ist dadurch gekennzeichnet, dass das digitale Modell geändert werden kann. Vorteilhaft ist dadurch eine umfassende Spezifizierung des digitalen Modells und/oder des digitalen Zwillings unterstützt, wodurch zum Beispiel Größenabmessungen und andere physikalische Parameter spezifiziert werden können.

Eine weitere vorteilhafte Weiterbildung des Systems ist dadurch gekennzeichnet, dass Aufgabendaten des Prozesses in einem Katalog der Datenbank hinterlegt sind. Dadurch können automatisierte Prozesse noch besser automatisiert durchgeführt werden, weil sie besser spezifiziert sind.

Eine weitere vorteilhafte Weiterbildung des Systems ist dadurch gekennzeichnet, dass das digitale Modell wenigstens eines aus Folgendem ist: Objekt, Verfahren, System. Vorteilhaft werden dadurch unterschiedliche Entitäten für das digitale Modell oder den digitalen Zwilling bereitgestellt.

Eine weitere vorteilhafte Weiterbildung des Systems ist dadurch gekennzeichnet, dass der Prozess ein Prozess zum Herstellen eines Objekts oder ein Prozess zum automatisierten Führen eines Fahrzeugs ist. Vorteilhaft lassen sich dadurch unterschiedliche und lediglich exemplarisch genannte Arten von automatisierten Prozessen spezifizieren.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele, die im Zusammenhang mit Figuren näher erläutert werden.
Fig. 1 zeigt ein prinzipielles Blockschaltbild eines vorgeschlagenen Systems.
Fig. 2 zeigt eine prinzipielle Skizze einer Bedieneinrichtung nach Einlesen von Sensordaten.
Fig. 3 zeigt eine prinzipielle Skizze einer Bedieneinrichtung nach Durchführung des vorgeschlagenen Verfahrens.
Fig. 4 zeigt einen prinzipiellen Ablauf einer Ausführungsform des vorgeschlagenen Verfahrens.

Die Erfindung wird nachfolgend anhand zweier beispielhafter automatisierter Prozesse in Form eines Montage- bzw. Assemblierungsprozesses und eines Transportprozesses näher beschrieben. Es versteht sich von selbst, dass die Erfindung auch für andere Arten von automatisierten Prozessen, die hier nicht näher beschrieben sind, verwendet werden kann.

Im Folgenden wird unter einem "digitalen Modell" eine wenigstens teilweise, vorzugsweise vollständige digitale Beschreibung eines Objekts und/oder eine wenigstens teilweise, vorzugsweise vollständige digitale Beschreibung eines Prozesses verstanden.

Im Folgenden wird unter einem an sich bekannten "digitalen Zwilling" (engl. digital twin) eine wenigstens teilweise, vorzugsweise vollständige digitale Beschreibung eines digitalen Modells in Kombination mit realen Daten von Objekten, z.B. physikalisch erfassten Sensordaten verstanden. Der digitale Zwilling repräsentiert somit eine konkrete Instanz eines eher abstrakt gehaltenen digitalen Modells.

Bei einem digitalen Zwilling existieren somit im Unterschied zu einem digitalen Modell Assoziationen bzw. Verknüpfungen bzw. ein Zusammenhang mit realen Daten (z.B. sensorisch erfasste Daten von Objekten, Prozessen, Systemen, usw.). Unter einer sogenannten "Assoziation" können in diesem Zusammenhang erkannte Übereinstimmungen bzw. erkannte Zusammenhänge zwischen Rohsensordaten und einem digitalen Modell verstanden werden.

Beim automatisierten Prozess kann es sich beispielsweise um eine vollständige Abfolge von Schritten zum automatisierten Herstellen eines Objekts, um eine vollständige physikalische Beschreibung eines Objekts (z.B. betreffend Material, Abmessungen, Farbe, Gewicht, usw.) handeln. Es versteht sich von selbst, dass unter einem automatisierten Prozess auch eine vollständige Abfolge von Schritten anderer, hier nicht erwähnter automatisierter Prozesse verstanden werden kann.

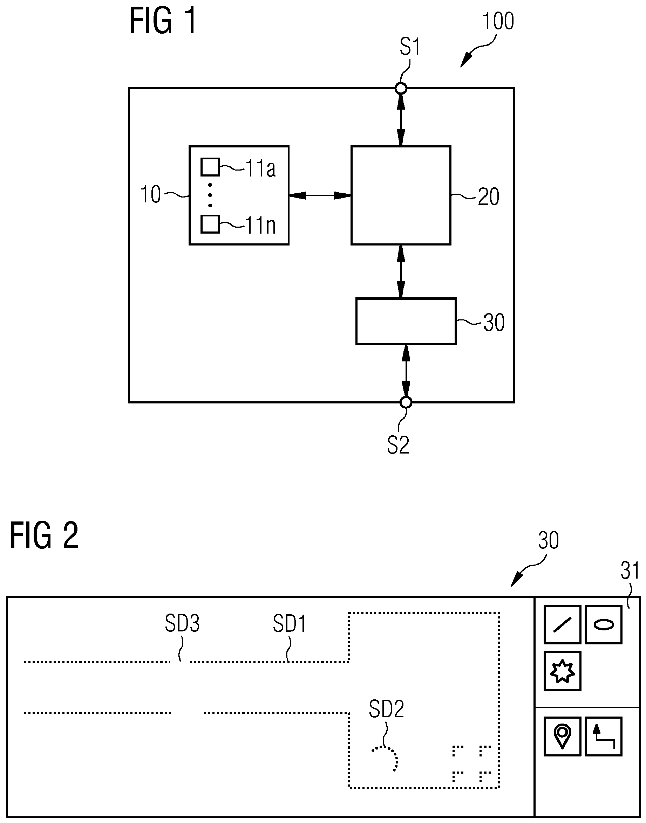

Fig. 1 zeigt ein prinzipielles Blockschaltbild einer Ausführungsform eines vorgeschlagenen Systems 100. Man erkennt eine Datenbank 10, die funktional mit einer Spezifizierungseinrichtung 20 verbunden ist. Die Spezifizierungseinrichtung 20 ist funktional mit einer ersten Schnittstelle S1 des Systems 100 verbunden. An die erste Schnittstelle S1 kann eine mittels des automatisierten Prozesses zu steuernde bzw. zu überwachende Vorrichtung angeschlossen werden. Zu diesem Zweck weist die Vorrichtung wenigstens einen oder mehrere Sensoren auf, mittels derer Sensordaten (z.B. Laserdaten, Kamerabilder, usw.) erfasst und über die erste Schnittstelle S1 an die Spezifizierungseinrichtung 20 übermittelt werden.

Die Spezifizierungseinrichtung 20 ist funktional mit einer Bedieneinrichtung 30 verbunden. Die Bedieneinrichtung 30 ist über eine zweite Schnittstelle S2 von einem menschlichen Anwender (nicht dargestellt) bedienbar. Die Bedieneinrichtung 30 kann z.B. als eine Website ausgebildet sein, auf der sich der Anwender mit geeigneten, persönlichen Identifizierungsdaten einloggen kann. Die Bedieneinrichtung 30 kann auch als eine graphische Benutzeroberfläche und/oder als eine Virtual-Reality-Brille ausgebildet sein.

In der Datenbank 10 sind sowohl digitale Modelle 11a...11n als auch digitale Zwillinge 11a...11n wenigstens eines Objekts und/oder wenigstens eines Prozesses und/oder wenigstens eines Systems des automatisierten Prozesses hinterlegt.

Die Pfeile zwischen der Datenbank 10, der Spezifizierungseinrichtung 20 und der Bedieneinrichtung 30 stellen Datenströme zwischen den genannten Einheiten dar. Mittels der Bedieneinrichtung 30 ist eine manuell gesteuerte Interaktion (z.B. per Mausklick) eines Anwenders zum Ändern/Löschen/Ergänzen/Konfigurieren von Attributen der digitalen Zwillinge 11a...11n und/oder der digitalen Modelle 11a...11n möglich. Auf diese Weise kann z.B. ein Parameter in Form eines Gewichts des digitalen Modells 11a...11n und/oder des digitalen Zwillings 11a...1n, der mit den genannten Sensoren sensorisch nicht erfasst werden kann, unter Mitwirkung des Anwenders spezifiziert werden.

Zwischen der Bedieneinrichtung 30 und der Spezifizierungseinrichtung 20 werden Daten betreffend Erweiterungen oder Korrekturen der digitalen Modelle 11a...11n und/oder der digitalen Zwillinge 11a...11n übertragen. Dazu bereitet die Bedieneinrichtung 30 die vom Anwender eingegebenen Daten derart vor, dass sie von der Spezifizierungseinrichtung 20 "verstanden" werden können.

Per Bedieneinrichtung 300 kann auf diese Weise z.B. eine korrigierte Höhe einer Tür an die Spezifizierungseinrichtung 20 übermittelt werden, die diese Daten dann an die Datenbank 10 übermittelt, wo das entsprechende digitale Modell 11a...11n und/oder der entsprechende digitale Zwilling 11a...11n entsprechend aktualisiert werden. Mittels der Bedieneinrichtung 30 kann ein Objekt in unterschiedlicher Art und Weise dargestellt werden: z.B. graphisch, als Tabelle, Katalog von Elementen, usw. Daten des Objekts werden zu diesem Zweck aus der Datenbank 10 via Spezifizierungseinrichtung 20 an die Bedieneinrichtung 30 übermittelt, wo der Anwender die genannte Bearbeitung bzw. Spezifizierung vornehmen kann. Die Spezifizierungseinrichtung 20 übernimmt dabei auch eine Prüfung einer Konsistenz der Daten des Objekts.

Die Spezifizierungseinrichtung 20 des Systems 100 kann an der ersten Schnittstelle S1 Sensordaten einer Infrastruktur z.B. eine Produktionsanlage mit Sensorik eines zu steuernden digitalen automatisierten Prozesses einlesen und assoziiert bzw. verknüpft die real erfassten Sensordaten mit einem oder mehreren entsprechenden digitalen Modellen 11a...11n, die zentral in der Datenbank 10 hinterlegt sind. Die Sensordaten können dabei z.B. von wenigstens einem Radarsensor, Kamera, Ultraschallsensor, Lidarsensor, usw. (nicht dargestellt) erfasst und bereitgestellt werden.

Die digitalen Modelle 11a...11n können physikalische Objekte in der Anwendungsdomäne, d.h. in der realen Welt, wie z.B. Farbe, Material, Prozessdaten, usw. oder andere Systemressourcen und Funktionalitäten des automatisierten Prozesses repräsentieren. Unter Verwendung der Bedieneinrichtung 30 kann der Anwender die von der Spezifizierungseinrichtung 20 generierten Verknüpfungen der Sensordaten mit den digitalen Modellen 11a...11n, d.h. die digitalen Zwillinge 11a...11n abändern, wobei der Anwender Parameter eines Objekts und/oder Parameter eines Objekts und/oder eines Prozesses anpassen, ergänzen, verifizieren, usw., d.h. spezifizieren kann.

Die drei Einheiten Datenbank 10, Spezifizierungseinrichtung 20 und Bedieneinrichtung 30 sind somit zu einem gegenseitigen Interagieren vorgesehen und erlauben dadurch ein effizientes Set-up bzw. Betriebsweise des vorgeschlagenen Systems 100 zum Spezifizieren und/oder Steuern eines automatisierten Prozesses. Im Ergebnis kann dadurch eine zentrale Hinterlegung von möglichst vielen, insbesondere sämtlichen Ressourcen (wie z.B. Fertigungseinrichtungen, Robotereinrichtungen, Transporteinrichtungen, Logistikeinrichtungen, usw.)zum Spezifizieren und/oder Steuern des automatisierten Prozesses bereitgestellt werden.

Im Ergebnis lernt das digitale Modell 11a...11n und/oder der digitale Zwilling 11a...11n mit jeder Vorrichtung des automatisierten Prozesses hinzu, sodass auf diese Weise vorteilhaft eine Verfeinerung des digitalen Modells 11a...11n und/oder des digitalen Zwillings 11a...11n realisiert ist.

Nachfolgend werden zwei lediglich exemplarische Anwendungsszenarien zum Einsatz des vorgeschlagenen Systems 100 näher beschrieben. Ein erstes Szenario betrifft einen Montage- bzw. Assemblierungsprozess eines oder mehrerer Werkstücke. Dabei steht ein Arbeiter vor einer Werkbank mit zu assemblierenden Teilen bzw. Werkstücken und den zur Assemblierung erforderlichen Werkzeugen. Die gesamte oder ein Teil der Szenerie wird von einem Sensor in Form einer optischen Kamera (nicht dargestellt) erfasst, welche an der ersten Schnittstelle S1 des Systems 100 zwei- und/oder dreidimensionale Sensordaten bereitstellt. Der Arbeiter kann z.B. als Bedieneinrichtung 30 eine Augmented-Reality-Brille tragen, die vom Anwender über die zweite Schnittstelle S2 angesteuert wird und die zur Visualisierung von vorgeschlagenen digitalen Modellen 11a...11n und als eine Eingabeeinrichtung zur Spezifizierung der digitalen Modelle 11a...11n fungiert.

Die Erstellung des digitalen Modells bzw. Zwillings 11a...11n der relevanten Objekte wird von der Spezifizierungseinrichtung 20 auf diese Weise in Kooperation mit Eingaben des Anwenders durchgeführt und kann folgende Schritte umfassen:
Eine Objektdetektion/-identifikation, wobei basierend auf den erwähnten Sensordaten in der Datenbank 10 hinterlegte digitalen Modelle 11a...11n mit den Sensordaten verknüpft werden und dadurch als mögliche digitale Zwillinge 11a...11n der sensorisch erfassten Objekte dienen. Der Anwender kann daraufhin den vorgeschlagenen digitalen Zwilling 11a...11n auswählen und danach mittels eigener Eingaben an der Bedieneinrichtung 30 spezifizieren.

Sodann erfolgt eine Parametrierung bzw. Spezifizierung (z.B. in Form von Objektgeometrie, Gewicht, Material, Farbe, usw.) für den ausgewählten digitalen Zwilling 11a...11n, wobei das System 100 dem Anwender die identifizierten Parameter mittels der Bedieneinrichtung 30 präsentiert und beim Anwender bei Unsicherheit explizit für mehr Informationen nachfragt, z.B. hinsichtlich Größenabmessungen oder Gewicht, oder hinsichtlich Größen, die von den erfassten Sensordaten nicht umfasst sind.

Zu diesem Zweck erfolgt ein Vergleich des digitalen Zwillings 11a...11n mit dem von der Spezifizierungseinrichtung 20 erstellten digitalen Zwilling 11a...11n, wobei bei einer gewissen Abweichung beim Anwender mittels der Bedieneinrichtung 30 eine graphisch dargestellte und/oder akustische Nachfrage durchgeführt wird. Dies wird dem Anwender auf der Bedieneinrichtung 30 angezeigt. Daraufhin kann der Anwender mittels der Bedieneinrichtung 30 Parameter des digitalen Zwillings 11a...11n überprüfen und/oder korrigieren und/oder ergänzen. Die ergänzten Parameter werden von der Spezifizierungseinrichtung 20 verwendet, um den digitalen Zwillinge 11a...11n entsprechend zu ändern und die derart erstellten bzw. aktualisierten digitalen Zwillinge 11a...11n in der Datenbank 10 zu hinterlegen bzw. zu aktualisieren.

Ferner können vom Anwender zur Datenbank 10 auch noch nicht vorhandene digitale Modelle 11a...11n bzw. digitale Zwillinge 11a...11n hinzugefügt werden.

Im Falle, dass das System 100 nicht in der Lage ist, ein Objekt per Sensordaten und eines entsprechenden digitalen Zwillings 11a...11n zu identifizieren, existieren mehrere unterschiedliche Optionen:
- Basierend auf den erfassten Sensordaten kann ein erstes, näherungsweise zutreffendes Objektmodell bzw. Modellkategorie (z.B. Objekt, Prozess, System, usw.)identifiziert werden, welches durch Nutzereingabe mittels der Bedieneinrichtung 30 verbessert werden kann. Zu diesem Zweck kann der Anwender zusätzliche Parameter, wie zum Beispiel Größenangaben, Farbe, Materialien, usw. über die Bedieneinrichtung 30 eingeben, die dann von der Spezifizierungseinrichtung 20 verwendet werden, um den digitalen Zwilling 11a...11n zu erstellen.
- Das System 100 präsentiert dem Anwender über die Bedieneinrichtung 30 ähnliche Objekte, welche durch den Nutzer adaptiert werden können.
- Ferner kann auch ein neues digitales Modell 11a...11n vom Anwender erstellt werden, das mit bekannten Eigenschaften, wie z.B. Größe, Farbe, Materialien, usw. z.B. aus einem CAD-Modell ergänzt werden kann. Diese neu erstellte digitale Modell 11a...11n wird dann von der Spezifizierungseinrichtung 20 an die Datenbank 10 übermittelt und dort hinterlegt.

Die Erstellung des digitalen Zwillings 11a...11n von Aufgaben des automatisierten Prozesses wird, wie oben im Zusammenhang mit der Erstellung des digitalen Zwillings 11a...11n von Objekten erläutert, von der Spezifizierungseinrichtung 20 in Kooperation mit dem Anwender durchgeführt und kann folgende Schritte a) bis d) umfassen:
a) Unterbreiten von aus der Datenbank 10 stammenden Vorschlägen eines digitalen Zwillings 11a...11n durch das System 100, die für die sensorisch erfassten Objekte geeignet erscheinen
b) Präsentation der Vorschläge unter a) für den Anwender mittels der Bedieneinrichtung 30
c) Präsentation und Beschreibung des gewünschten finalen Zustands durch den Anwender unter Einschluss von Geometrie und nicht sichtbarer Zustände (wie z.B. Temperatur, Materialcharakteristika, Klebung von Oberflächen, usw.)
d) Eingabe von relevanten Einschränkungen über die Bedieneinrichtung 30 durch den Anwender.

Während und nach den genannten Schritten a) bis d) kann das vorgeschlagene System 100 den Anwender um Eingabe von relevanten Informationen betreffend Zeit/Chronologie von Schritten, Objektzuständen, und Beschränkungen (z.B. dass das Objekt nicht aufrecht gehalten werden muss) bitten. Zum Beispiel kann der Anwender zu diesem Zweck mittels Dialogboxen in der Bedieneinrichtung 30 zur Eingabe von Daten aufgefordert werden. Ferner können mittels der Bedieneinrichtung 30 nicht sichtbare Informationen, wie zum Beispiel Temperatur, wirkende Kräfte, usw. durch eine graphische Darstellung von Farben und/oder Pfeilen und/oder entsprechenden Zahlenwerten visualisiert werden.

Das vorgeschlagene System 100 kann erforderliche Fortschritte des automatisierten Prozesses extrahieren (d.h. Zwischenergebnisse einer Spezifizierung anzeigen), die sie dem Anwender über die Bedieneinrichtung 30 präsentiert, wobei der Anwender die extrahierten Fortschritte mittels der Bedieneinrichtung 30 überprüfen und gegebenenfalls korrigieren bzw. ergänzen kann (z.B. Positionen, an denen ein Objekt mittels eines Roboterarms gegriffen werden kann, eine Instruktion, dass Objekt A mit Objekt B zusammengeklebt werden muss, usw.).

Das vorgeschlagene System 100 extrahiert erforderliche Fähigkeiten bzw. Fertigkeiten zur Herstellung eines Objekts und/oder zum Transport eines Objekts und präsentiert diese dem Anwender mit Hilfe der Bedieneinrichtung 30, wobei der Anwender die Fertigkeiten mittels der Bedieneinrichtung 30 prüfen und gegebenenfalls korrigieren bzw. ergänzen kann (z.B. "Objekte mit Schrauben zusammenfügen"), wodurch die Spezifizierung des Objekts auf effiziente und einfache Weise durch den Anwender geändert werden kann.
Danach werden der Datenbank 10 die durch den Anwender vorgenommenen Änderungen für die Objekte und/oder für den Prozess in Form von geänderten digitalen Modellen bzw. Zwillingen 11a...11n hinzugefügt, wodurch für die Datenbank 10 eine kontinuierliche Verbesserung eines maschinellen Lernprozesses der digitalen Modelle 11a...11n bzw. Zwillinge 11a...11n unterstützt ist.

Das nachfolgend beschriebene zweite Anwendungsszenario des vorgeschlagenen Verfahrens und Systems 100 betrifft eine Materialtransportanwendung, bei der ein automatisiertes Fahrzeug (engl. automated guided vehicle, AGV) zum Transportieren von Gütern in einem Warenlager eingesetzt wird. Das automatisierte Fahrzeug repräsentiert dabei eine mit Sensoren ausgestattete mobile Plattform, wobei die Sensoren zum Navigieren des automatisierten Fahrzeugs zwischen verschiedenen Positionen des Warenlagers genutzt werden. Beispielsweise kann das automatisierte Fahrzeug mit Sensoren in Form eines oder mehrerer Laserscanner, und/oder einer oder mehrerer Kameras ausgestattet sein und kann sich frei durch das Warenlager bewegen, ohne dabei z.B. an optische oder induktive Schienen gebunden zu sein.

In dem beschriebenen Anwendungsszenario ist eine Spezifizierung eines automatisierten Gütertransports vorgesehen, wobei ein Navigieren von einer Position zur nächsten vorgesehen ist, wobei in diesem Zusammenhang weitere Aufgaben, wie z.B. eine Handhabung und Ab- bzw. Übergabe von Gütern nicht im Detail betrachtet werden.

Der Prozess des Erstellens des digitalen Zwillings 11a...11n wird von der Spezifizierungseinrichtung 20 in Kooperation mit Eingaben des Anwenders mittels der Bedieneinrichtung 30 durchgeführt und umfasst in diesem Fall:
Erstellen eines digitalen Zwillings 11a...11n der Umgebung durch die nachfolgend näher erläuterten Schritte a) bis c):

### a) Erstellen einer Referenzkarte

Um das System 100 einzurichten, steuert ein erfahrener Arbeiter das automatisierte Fahrzeug durch das Warenlager und sammelt Sensordaten mit den genannten Sensoren des automatisierten Fahrzeugs. Diese Sensordaten werden vom vorgeschlagenen System 100 benutzt, um eine Referenzkarte des Warenlagers zu erstellen, die nachfolgend zum Bestimmen eines Orts des Fahrzeugs innerhalb des Warenlagers und zum Navigieren innerhalb des Warenlagers benutzt wird.
Ein Ergebnis von Schritt a) ist prinzipiell in der Skizze von Fig. 2 dargestellt, die die Bedieneinrichtung 30 zeigt, in der Sensordaten SDl...SDn von Sensoren einer über die erste Schnittstelle S1 an das System 100 angebundenen Fertigungseinrichtung (nicht dargestellt) als einzelne Punkte dargestellt sind.

In einer weiteren Ausführung liegen die Daten der Umgebung bereits als eine digitale Karte vor.

Das System 100 macht dem Anwender Vorschläge über die Präsenz von sogenannten "Aufgaben-Merkmalen" der Referenzkarte, wobei zum Beispiel digitale Zwillinge 11a...11n aus der Datenbank 10 entnommen und dem Anwender mittels der Bedieneinrichtung 30 präsentiert werden. Diese Aufgaben-Merkmale repräsentieren Aufgaben des automatisierten Prozesses, wie zum Beispiel Aufnahme-, Übergabe- und Ladestationen, Türen, usw., die für den automatisierten Materialtransport innerhalb des Warenlagers relevant sind.

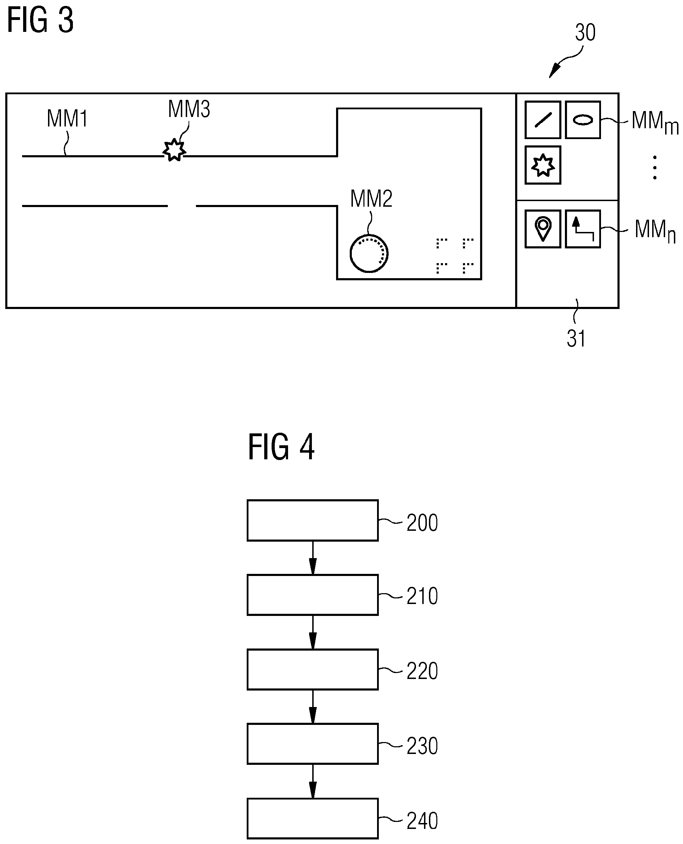

Fig. 3 zeigt, dass das System 100 nunmehr aus den Sensordaten SD1 ein Merkmal MM1 in Form einer Wand erkannt hat, aus den Sensordaten SD3 ein Merkmal MM3 in Form einer Türe und aus den Sensordaten SD2 ein Merkmal MM2 in Form einer Säule innerhalb des Warenlagers. Die erkannten Merkmale werden, wie in Fig. 3 dargestellt, als in der Datenbank 10 hinterlegte digitale Zwillinge 11a...11n ausgelesen und auf der Bedieneinrichtung 30 dargestellt. Die Bedieneinrichtung 30 kann ein Eingabefeld 31 aufweisen, welches vom Anwender zur Auswahl von vorgeschlagenen Merkmalen und zum manuellen Einfügen weiterer Merkmale MMn in das digitale Modell 11a...11n und/oder in den digitalen Zwilling 11a...11n genutzt werden kann. Die Daten der eingefügten Merkmale werden von der Bedieneinrichtung 30 an die Spezifizierungseinrichtung 20 weitergeleitet, die eine Überarbeitung bzw. Ergänzung bzw. Aktualisierung des digitalen Zwillings 11a...11n vornimmt und den derart überarbeiteten digitalen Zwilling 11a...11n an die Datenbank 10 übermittelt, wo er hinterlegt wird.
Der Anwender kann danach die vom System 100 vorgeschlagenen Merkmale akzeptieren, abändern oder modifizieren.

Vorteilhaft kann der Anwender mittels der Bedieneinrichtung 30 auch "manuell" zusätzliche Aufgabenmerkmale in der Referenzkarte platzieren, wie zum Beispiel eine Ladestation, die ursprünglich vom System 100 nicht vorgeschlagen war. Auf diese Weise fügt das vorgeschlagene System 100 in einer teilweise überwachten Art und Weise semantische Merkmale zur Referenzkarte hinzu.

### b) Parametrierung der Referenzkarte

Das vorgeschlagene System 100 erlaubt es dem Anwender in vorteilhafter Weise auch, die Aufgabenmerkmale zu parametrieren, d.h. z.B. auf welche Art und Weise die Aufgabenmerkmale durchgeführt werden sollen (z.B. an welcher Stelle ein Objekt mittels eines Roboterarms gegriffen werden darf, wie eine Trajektorie eines Fahrzeugs abzufahren ist, usw.).

Automatisch berechnete Werte, wie z.B. eine Breite von Türen können vom Anwender manuell korrigiert werden. Das vorgeschlagene System 100 erlaubt dem Anwender auch zusätzliche Merkmale oder Parameter, die aus den Rohsensordaten nicht ermittelt werden können, dem digitalen Modell 11a...11n und/oder dem digitalen Zwilling 11a...11n hinzuzufügen, wie z.B. ein Gewicht einer Tür. Weiterhin ermöglicht es das vorgeschlagene System 100, Aufgabenmerkmale, die aus die aus verschiedenen Sensoren extrahiert wurden, in einem einzelnen Merkmal ("konsistentes Merkmal") zusammenzufassen. Beispielsweise kann in diesem Sinne vorgesehen sein, verlinkende Bilder einer Kamera für Distanzmessungen eines Laserscanners eines Aufgabenmerkmals zu verwenden.

### c) Erweitern eines Katalogs von Aufgabenmerkmalen

Eine Liste von Aufgabenmerkmalen des Systems 100 kann wie vorgehend im Assemblierungsszenario beschrieben, erweitert werden, wobei digitale Zwillinge 11a...11n der Aufgaben in der Datenbank 10 hinterlegt werden.

Erstellen eines digitalen Zwillings 11a...11n von Aufgaben mittels der nachfolgend erläuterten Schritte d) und e):

### d) Lokalisierung von Zielen

Eine Methode, um eine Navigationsaufgabe zu spezifizieren, besteht darin, für das automatisierte Fahrzeug in der Referenzkarte einen Zielort anzugeben. Unter Verwendung des vorgeschlagenen Systems 100 kann der Anwender die aufgabenrelevanten Orte, d.h. die Orte an denen die Aufgabe durchgeführt werden soll, in der Referenzkarte spezifizieren. Das automatisierte Fahrzeug kann vom Anwender zu einem dieser vordefinierten Zielorte gesteuert werden.

### e) Vordefinierte Trajektorien

Eine andere Art, um einen automatisierten Prozess in Form einer Navigationsaufgabe zu spezifizieren, besteht darin, eine Trajektorie für das automatisierte Fahrzeug bereitzustellen, die das automatisierte Fahrzeug in der Referenzkarte abfahren soll. Unter Verwendung des vorgeschlagenen Systems 100 kann der Anwender die aufgabenrelevanten Trajektorien, d.h. die Trajektorien, die vom automatisierten Fahrzeug abzufahren sind, in der Referenzkarte spezifizieren, d.h. festlegen auf welcher Trajektorie das automatisierte Fahrzeug fahren muss. Das automatisierte Fahrzeug kann daraufhin zum Abfahren einer dieser vordefinierten Trajektorien von der Spezifizierungseinrichtung 20 über die erste Schnittstelle S1 des Systems 100 angesteuert werden.

Im Ergebnis kann das vorgeschlagene Verfahren somit nicht nur zum Spezifizieren eines digitalen Modells eines automatisierten Prozesses verwendet werden, sondern optional oder zusätzlich auch zu dessen Steuerung.

Zusammenfassend wird mit der vorliegenden Erfindung ein vorteilhaftes Engineering-Tool bereitgestellt, welches umfassende Möglichkeiten zur Erstellung und Aktualisierung von digitalen Zwillingen sowie eine Aktualisierung von durch die digitalen Zwillinge repräsentierten automatischen Aufgaben ermöglicht, wodurch eine effiziente Spezifizierung und/oder Steuerung eines automatisierten Prozesses ermöglicht ist.

Vorteilhaft erlaubt das vorgeschlagene System 100 eine intuitive Benutzung und stellt ein interaktives Werkzeug bereit, dessen Benutzung keinerlei spezielle Schulung des Anwenders erfordert. Vorteilhaft kann der Anwender beim vorgeschlagenen System 100 durch Rückfragen interaktiv in die Erstellung/Ergänzung/Änderung/Konfiguration der digitalen Zwillinge eingebunden werden.

Vorteilhaft können mit dem vorgeschlagenen System auf diese Weise eine Spezifizierung und/oder Steuerung von automatisierten Fertigungslinien, z.B. zur automatisierten Fertigung von Industriegütern, realisiert werden.

Vorteilhaft kann damit eine semantische Anreicherung von Rohsensordaten bzw. eine Interpretation der Rohsensordaten durchgeführt werden, wobei das System 100 zu seiner Verwendbarkeit (z.B. zur Spezifizierung von Aufgaben mittels Demonstration in der virtuellen Realität) vorteilhaft keine vollständig befüllte Datenbank oder vollständige digitale Zwillinge erfordert.

Fig. 4 zeigt ein prinzipielles Ablaufdiagramm eines Verfahrens zum Spezifizieren eines digitalen Modells für einen automatisierten Prozess.

In einem Schritt 200 wird ein Bereitstellen von Sensordaten durchgeführt.

In einem Schritt 210 erfolgt ein Verknüpfen der Sensordaten mit Daten des digitalen Modells 11a...11n.
In einem Schritt 220 wird ein Anzeigen oder Ausgeben der mit den Sensordaten verknüpften Daten des digitalen Modells 11a...11n durchgeführt.

In einem Schritt 230 erfolgt ein Bereitstellen einer Möglichkeit zum Bestätigen oder Konfigurieren der mit den Sensordaten verknüpften Daten des digitalen Modells 11a...11n durch eine Eingabe eines Anwenders.

Schließlich werden in einem Schritt 240 die vom Anwender bestätigten oder konfigurierten, mit den Sensordaten verknüpften Daten des digitalen Modells 11a...11n berücksichtigt.

Vorteilhafte lässt sich das vorgeschlagene Verfahren als ein Computerprogrammprodukt realisieren, welches auf dem elektronischen System 100 abläuft. Eine einfache Adaptierbarkeit des Verfahrens ist auf diese Weise vorteilhaft unterstützt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Datenbank
- 11a...11n: digitales Modell/digitaler Zwilling
- 20: Spezifizierungseinrichtung
- 30: Bedieneinrichtung
- 31: Eingabefeld
- 100: System
- 200...240: Verfahrensschritte
- MM1...MMn: Merkmale
- S1, S2: Schnittstellen
- SD1...SDn: Sensordaten

## Patentansprüche

1. Verfahren zum Spezifizieren eines digitalen Modells (11a...11n) für einen automatisierten Prozess, aufweisend die Schritte:
a) Bereitstellen von Sensordaten;
b) Verknüpfen der Sensordaten mit Daten des digitalen Modells (11a...11n);
c) Anzeigen oder Ausgeben der mit den Sensordaten verknüpften Daten des digitalen Modells (11a...11n);
d) Bereitstellen einer Möglichkeit zum Bestätigen oder Konfigurieren der mit den Sensordaten verknüpften Daten des digitalen Modells (11a...11n) durch eine Eingabe eines Anwenders; und
e) Berücksichtigen der vom Anwender bestätigten oder konfigurierten mit den Sensordaten verknüpften Daten des digitalen Modells (11a...11n).

2. Verfahren nach Anspruch 1, wobei die bestätigten, ergänzten oder geänderten mit den Sensordaten verknüpften Daten in ein überarbeitetes digitales Modell (11a...11n) übernommen werden, wobei das überarbeitete digitale Modell (11a...11n) für eine Ausführung des automatisierten Prozesses verwendet wird.

3. Verfahren nach Anspruch 1 oder 2, wobei die mit den Sensordaten verknüpften Daten des digitalen Modells (11a...11n) ein Objekt oder wenigstens einen Teil eines Objektes oder wenigstens einen Parameter eines Objektes darstellen.

4. Verfahren nach einem der vorhergehenden Ansprüche, wobei die mit den Sensordaten verknüpften Daten des digitalen Modells (11a...11n) einen Schritt des automatisierten Prozesses oder wenigstens einen Parameter eines Schrittes des automatisierten Prozesses oder wenigstens ein Zwischenstadium des Prozesses oder den gesamten Prozess darstellen.

5. Verfahren nach einem der vorhergehenden Ansprüche, wobei wenigstens einer aus folgenden Parametern des digitalen Modells (11a...11n) des Objekts geändert werden kann: Gewicht, Größe, Lage, Material, Farbe, Temperatur, Geometrie, Materialcharakteristikum.

6. Verfahren nach einem der Ansprüche 1 bis 5, wobei wenigstens einer aus folgenden Parametern des digitalen Modells (11a...11n) des Prozesses geändert werden kann: Reihenfolge von Schritten des Prozesses, Prozessparameter wie Temperatur, Material, Trajektorie für ein Führen eines automatisierten Fahrzeuges oder eine Position zum Ergreifen eines Objekts.

7. Verfahren nach einem der vorhergehenden Ansprüche, wobei das digitale Modell (11a...11n) in Form eines digitalen Zwillings ausgebildet ist.

8. Verfahren nach einem der vorhergehenden Ansprüche, wobei das Verfahren zum Steuern des automatisierten Prozesses verwendet wird.

9. System (100) zum Spezifizieren eines digitalen Modells (11a...11n) für einen automatisierten Prozess, aufweisend:
- eine erste Schnittstelle (S1) zum funktionalen Anbinden einer Vorrichtung des automatisierten Prozesses, wobei von der Vorrichtung des automatisierten Prozesses Sensordaten bereitstellbar sind;
- eine Datenbank (10) mit wenigstens einem digitalen Modell (11a...11n) des automatisierten Prozesses;
- eine Spezifizierungseinrichtung (20) zum Verknüpfen der Sensordaten mit dem wenigstens einen digitalen Modell (11a...11n); und
- eine Bedieneinrichtung (30) zu einem Bereitstellen einer Möglichkeit zum Bestätigen oder Konfigurieren des mit den Sensordaten verknüpften digitalen Modells (11a...11n) durch einen Anwender; wobei
- mittels der Spezifizierungseinrichtung (20) die vom Anwender bestätigten oder korrigierten mit den Sensordaten verknüpften Daten des digitalen Modells (11a...11n) für die Spezifizierung des digitalen Modells (11a...11n) berücksichtigt werden.

10. System (100) nach Anspruch 9, **dadurch gekennzeichnet, dass** die Bedieneinrichtung (30) eine graphische Benutzeroberfläche und/oder eine Virtual-Reality-Brille ist.

11. System (100) nach Anspruch 9 oder 10, **dadurch gekennzeichnet, dass** die Spezifizierungseinrichtung (20) aus den Sensordaten wenigstens ein Objekt erkennt und mittels der Bedieneinrichtung (30) anzeigt.

12. System (100) nach einem der Ansprüche 9 bis 11, **dadurch gekennzeichnet, dass** das angezeigte Objekt mittels der Bedieneinrichtung (30) bestätigt oder abgelehnt werden kann und/oder Parameter des Objekts geändert werden können.

13. System (100) nach einem der Ansprüche 9 bis 12, **dadurch gekennzeichnet, dass** das digitale Modell (11a...11n) geändert werden können.

14. System (100) nach einem der Ansprüche 9 bis 13, **dadurch gekennzeichnet, dass** Aufgabendaten des Prozesses in einem Katalog der Datenbank (10) hinterlegt sind.

15. System nach einem der Ansprüche 9 bis 14, **dadurch gekennzeichnet, dass** das digitale Modell (11a...11n) wenigstens eines aus Folgendem ist: Objekt, Verfahren, System.

16. System nach Anspruch 15, **dadurch gekennzeichnet, dass** der Prozess ein Prozess zum Herstellen eines Objekts oder ein Prozess zum automatisierten Führen eines Fahrzeugs ist.

17. Computerprogrammprodukt mit Programmcodemitteln zur Ausführung des Verfahrens nach einem der Ansprüche 1 bis 8, wenn es auf einem elektronischen System (100) abläuft oder auf einem computerlesbaren Datenträger gespeichert ist.
